# EUROPÄISCHE PATENTSCHRIFT

(11) **EP 2 816 195 B1**
(45) Veröffentlichungstag und Bekanntmachung des Hinweises auf die Patenterteilung: **21.12.2016**
(21) Anmeldenummer: 14000283.3
(22) Anmeldetag: 28.01.2014
(51) Int. Cl.: F01B 25/10, F01L 15/00, F01D 17/14

(54) **Ventil, insbesondere Dampfventil**
Valve, in particular steam valve
Soupape, en particulier soupape à vapeur

(30) Priorität: 17.06.2013 AT 4812013
(43) Veröffentlichungstag der Anmeldung: 24.12.2014
(73) Patentinhaber: MAN Truck & Bus Österreich AG, 4400 Steyr (AT)
(72) Erfinder: Lang, Michael, 8010 Graz (AT); Melcher, Norbert, 8010 Graz (AT); Stanzer, Stefan, 8172 Heilbrunn (AT)
(74) Vertreter: v. Bezold & Partner Patentanwälte - PartG mbB

(56) Entgegenhaltungen:
- WO-A1-2005/073511
- DE-A1-102007 046 605
- FR-A- 323 644
- FR-A- 376 129
- GB-A- 555 651
- US-A- 1 261 632
- US-A- 2 243 864
- US-A- 3 974 744
- US-A- 5 586 529

## Beschreibung

Die Erfindung betrifft ein Ventil, insbesondere ein Dampfventil, vorzugsweise für eine Expansionsmaschine z. B. für ein Kraftfahrzeug.

Zum Stand der Technik kann zunächst die US 3 974 744 A, die FR 376 129 A, WO 2005/073511 A1, FR 323 644 A, US 5 586 529 A, DE 10 2007 046 605 A1, GB 555 651 A und US 2 243 864 A1 genannt werden. US 1 261 632 A offenbart die Merkmale des Oberbegriffs des Anspruchs 1.
Aus dem Stand der Technik sind Systeme zur Abwärmenutzung von Verbrennungskraftmaschinen bekannt, in denen z. B. Dampfkreisläufe zur Anwendung kommen. Die Dampfkreisläufe umfassen Expansionsmaschinen, die erzeugten Dampf abarbeiten und in mechanische Leistung überführen. Ein Ziel der Entwicklung ist es, Expansionsmaschinen mit möglichst hohem Wirkungsgrad in solche Systeme einzubinden. Die Steuerung des Dampfeinlasses stellt hierbei eine Schlüsselkomponente dar. Bei der Verwindung von Hubkolbenexpansionsmaschinen z. B. können Dampfeinlassventile zum Einsatz kommen, wodurch eine Abdichtung der Frischdampfzufuhr zum Expansionsraum über einen Ventilsitz möglich ist. Die Betätigung solcher Dampfeinlassventile erfolgt über einen Ventilschaft, der gegenüber dem Expansionsraum durch Dichtelemente abgedichtet ist. Während der Phase eines Arbeitsspiels, in der das Druckniveau im Expansionsraum größer ist als im Raum der Ventilbetätigung oder allgemein der Außenseite des Expansionsraums, treten über die Dichtelemente Leckageströme auf, die einen Verlust darstellen. Des Weiteren ist der Wirkungsgrad der Expansionsmaschine maßgeblich vom Expansionsverhältnis abhängig. Ein hohes Expansionsverhältnis kann durch ein geringes Schadvolumen realisiert werden.

Eine Aufgabe der Erfindung ist es, ein Ventil, insbesondere ein Dampfeinfassventil, zu schaffen, das möglichst geringe Leckageströme und/oder ein möglichst geringes Schadvolumen aufweist.

Diese Aufgabe kann mit den Merkmalen des Hauptanspruchs gelöst werden. Vorteilhafte Weiterbildungen der Erfindung können den Unteransprüchen und der folgenden Beschreibung entnommen werden.

Die Erfindung schafft ein Ventil, vorzugsweise ein Dampfventil, wie etwa ein Dampfeinlassventil, zweckmäßig für eine Expansionsmaschine z. B. für ein Kraftfahrzeug, insbesondere ein Nutzfahrzeug, wie etwa einen Lastkraftwagen oder einen Omnibus. Das Ventil kann ebenso z. B. für einen Kompressor oder eine Verbrennungskraftmaschine genutzt werden.

Das Ventil umfasst einen Zuführraum, insbesondere einen Frischdampfraum, in den ein Medium, z. B. Dampf, Luft, Fluid, etc., über eine Ventilzufuhr einführbar ist, einen Arbeitsraum, in den das Medium aus dem Zuführraum einführbar ist und in dem das Medium expandierbar oder komprimierbar ist, einen Ventilteil, über das die Verbindung zwischen dem Zuführraum und dem Arbeitsraum öffenbar bzw. schließbar ist, und eine zweckmäßig hin- und herbewegbare Ventilstange, die mit einem ersten Teilabschnitt mit dem Ventilteil verbunden ist und zweckmäßig über einen zweiten Teilabschnitt quasi von außen ansteuerbar ist.

Das Ventil zeichnet sich insbesondere dadurch aus, dass es einen Faltenbalg zur abschnittsweisen, insbesondere hermetischen Abdichtung des Arbeitsraums aufweist und insbesondere dadurch, dass es ein Ventilrückstellelement aufweist, das zur Rückstellung des Ventilteils dient und das zweckmäßig vollständig in dem Zuführraum angeordnet ist.

Der Faltenbalg ist um die Ventilstange herum angeordnet und erstreckt sich vorzugsweise entlang der Ventilstange.

Das Ventil umfasst vorzugsweise zwei in Längsrichtung der Ventilstange voneinander beabstandete Ventilstangen-Führungen, zweckmäßig eine für den ersten Teilabschnitt der Ventilstange und eine für den zweiten Teilabschnitt der Ventilstange.

Es ist möglich, dass der Faltenbalg um eine Ventilstangen-Führung zur Führung der Ventilstange, insbesondere des ersten Teilabschnitts, herum angeordnet ist und zweckmäßig entlag der Ventilstangen-Führung entsprechend der Ventilstangenbewegung hin- und herbewegbar ist.

Es ist darüber hinaus möglich, dass der Faltenbalg an einer Ventilstangen-Führung zur Führung der Ventilstange, insbesondere des zweiten Teilabschnitts, quasi stationär montiert ist, vorzugsweise mit seinem Stirn- oder Endabschnitt.

Der Faltenbalg kann mit seiner Innenfläche mit dem Arbeitsraum fluidisch verbunden sein und somit vorzugsweise durch das unter Druck stehende Medium innendruckbeaufschlagbar ausgeführt werden. Alternativ kann der Faltenbalg mit seiner Außenfläche mit dem Arbeitsraum fluidisch verbunden sein und somit vorzugsweise durch das unter Druck stehende Medium außendruckbeaufschlagbar ausgeführt werden.

Der Faltenbalg ist so ausgeführt, dass er zur Aufnahme der zweckmäßig hin- und hergehenden Ventilstangenbewegung geeignet ist und/oder so ausgeführt ist, dass er die Ventilstangenbewegung mitmacht.

Der Faltenbalg ist vorzugsweise aus einem metallischen Material hergestellt.

Das Ventil kann ferner einen Ventilraum aufweisen, in dem der zweite Teilabschnitt der Ventilstange zumindest abschnittsweise verläuft und der z. B. abschnittsweise durch eine Ventilstangen-Führung zur Führung der Ventilstange, insbesondere des zweiten Teilabschnitts, begrenzt werden kann.

Der Faltenbalg dient insbesondere zur Abdichtung des Arbeitsraums gegenüber dem Ventilbetätigungsabschnitt und/oder gegenüber der Außenseite des Arbeitsraums, wo normalerweise Atmosphärendruck herrscht. Der Ventilbetätigungsabschnitt umfasst insbesondere den Ventilraum und/oder den zweiten Teilabschnitt der Ventilstange.

Das Ventil weist zweckmäßig ein Ventilgehäuse auf, aus dem der zweite Teilabschnitt der Ventilstange, vorzugsweise über den Ventilraum, herausgeführt ist, um durch ein Steuerungsorgan (z. B. einen Steuernocken) zur Steuerung des Ventils betätigt werden zu können.

Das Ventilrückstellelement dient zweckmäßig zur Rückstellung des Ventilteils in seine Schließstellung und/oder ist so angeordnet, dass es quasi direkt auf das Ventilteil wirkt, insbesondere auf die Stirnfläche des Ventilteils. Die Stirnfläche des Ventilteils weist zweckmäßig zum Zuführraum.

Das Ventilrückstellelement ist vorzugsweise als Rückstellfeder, z. B. Spiral-Rückstellfeder, ausgeführt.

Das Ventilteil ist an einem Ventilsitz anlegbar, um die Verbindung zwischen dem Zuführraum und dem Arbeitsraum zu schließen, und zweckmäßig von dem Ventilsitz lösbar, um die Verbindung zwischen dem Zuführraum und dem Arbeitsraum zu gewähren.

Es ist möglich, dass das Ventilteil insbesondere integraler und/oder einstückiger Teil der Ventilstange ist, insbesondere des ersten Teilabschnitts der Ventilstange. Die Ventilstange umfasst somit zweckmäßig den ersten Teilabschnitt, den zweiten Teilabschnitt und das Ventilteil.

Es ist möglich, dass die Ventilstange, insbesondere das Ventilteil, zweckmäßig rotatorisch vom Faltenbalg getrennt ist und/oder unabhängig vom Faltenbalg drehbar gelagert ist. Dadurch wird z. B. ermöglicht, dass das Ventilteil sich während seiner Hin- und Herbewegung zumindest geringfügig drehen kann, was insbesondere aus Verschleißgründen in Bezug auf das Ventilteil und den Ventilsitz vorteilhaft ist.

Das Ventilteil kann mittels seiner dem Zuführraum zugewandten Stirnfläche den Zuführraum abschnittsweise begrenzen.

Vorzugsweise erstrecken sich der Faltenbalg und das Ventilrückstellelement und zweckmäßig die Ventilstange, insbesondere das Ventilteil, koaxial zueinander.

Zu erwähnen ist noch, dass zweckmäßig das unter Druck stehende Medium in dem Arbeitsraum expandiert oder komprimiert wird, während die Verbindung zwischen dem Zuführraum und dem Arbeitsraum geschlossen ist. Der Arbeitsraum ist somit insbesondere ein Expansions- oder Komprimierungsraum.

Zu erwähnen ist ferner, dass der erste Teilabschnitt der Ventilstange auch als Ventilschaft, und der zweite Teilabschnitt der Ventilstange auch als Stößelstange bezeichnet werden könnte.

Das Ventil ist vorzugsweise ein Dampfventil. Das Medium ist vorzugsweise ein arbeitsfähiges Medium, insbesondere Dampf.

Es ist möglich, dass der Faltenbalg als alleiniges Rückstellelement zur Rückstellung des Ventilteils z. B. in seine Schließstellung genutzt wird. Alternativ kann der Faltenbalg zusätzlich zu dem Ventilrückstellelement als Rückstellelement dienen. Zu diesem Zweck kann der Faltenbalg als Faltenbalg mit Federwirkung ausgeführt sein.

Die Erfindung ist nicht auf ein Ventil beschränkt, sondern umfasst auch eine Expansionsmaschine oder eine Kompressormaschine für ein Kraftfahrzeug, vorzugsweise ein Nutzfahrzeug, z. B. einen Lastkraftwagen oder einen Omnibus, mit einem Ventil wie hierin beschrieben. Es ist möglich, dass das Ventil als stehendes, hängendes oder seitliches Ventil der Expansions- oder Kompressormaschine ausgeführt ist.

Ferner umfasst die Erfindung ein Kraftfahrzeug, vorzugsweise ein Nutzfahrzeug, wie etwa einen Lastkraftwagen oder einen Omnibus, mit einem Ventil oder einer Expansions- oder Kompressormaschine wie hierin beschrieben.

Die zuvor beschriebenen bevorzugten Ausführungsformen der Erfindung sind beliebig miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Fig. 1: zeigt eine Querschnittsansicht eines Ventils gemäß einer Ausführungsform der Erfindung und
- Fig. 2: zeigt eine Querschnittsansicht eines Ventils gemäß einer anderen Ausführungsform der Erfindung.

Die in den Figuren gezeigten Ausführungsformen stimmen teilweise überein, wobei ähnliche oder identische Teile mit den gleichen Bezugszeichen versehen sind, und zu deren Erläuterung auch auf die Beschreibung der anderen Ausführungsform verwiesen wird, um Wiederholungen zu vermeiden.

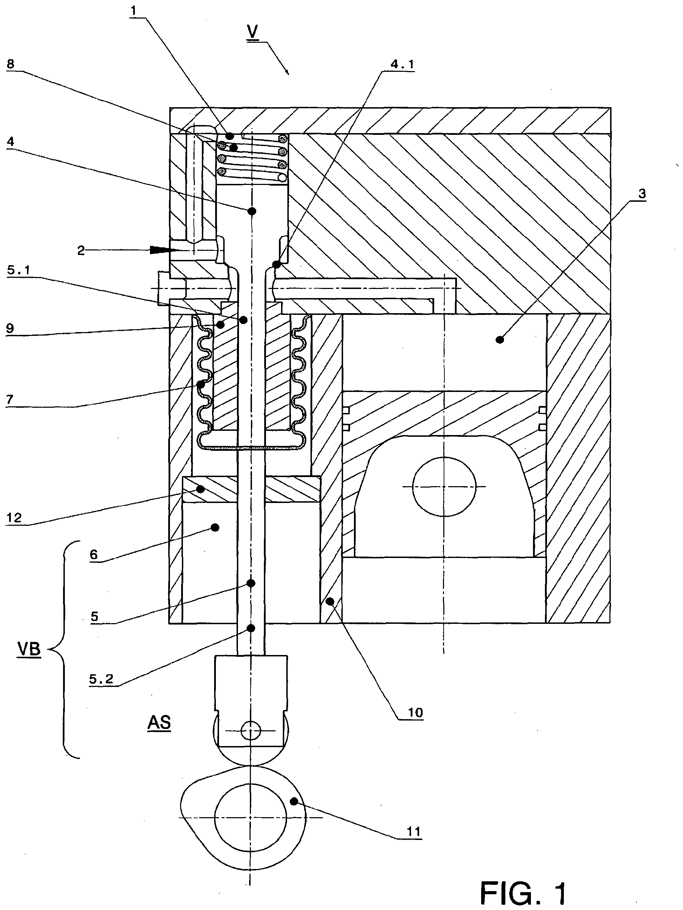

Figur 1 zeigt eine Querschnittsansicht eines Ventils V gemäß einer Ausführungsform der Erfindung. Das Ventil V ist vorzugsweise ein Dampfventil, insbesondere ein Dampfeinlassventil, zweckmäßig für eine Expansionsmaschine für ein Kraftfahrzeug. Nachfolgend wird das Ventil V in Bezug auf das arbeitsfähige Medium "Dampf" beschrieben. Die Nutzung des Ventils V ist allerdings nicht auf das Medium "Dampf" beschränkt, sondern ist auch für andere Fluide, z. B. komprimierbare Fluide, anwendbar.

Das Ventil V weist einen Zuführraum 1, insbesondere einen Frischdampfraum, auf, in den Dampf über eine Ventilzufuhr 2 eingeführt werden kann.

Das Ventil V weist ferner einen Arbeits-, insbesondere Expansionsraum 3 auf, in den der Dampf aus dem Frischdampfraum 1 eingeführt werden kann und in dem der Dampf expandieren kann. Dabei herrscht imExpansionsraum 3 meist ein Druck, der größer ist als der Druck außerhalb des Expansionsraums 3.

Das Ventil V weist des Weiteren ein Ventilteil 4 auf, über das die Verbindung zwischen dem Frischdampfraum 1 und dem Expansionsraum 3 geöffnet oder geschlossen werden kann und das zweckmäßig mit seiner Stirnfläche den Frischdampfraum 1 abschnittsweise begrenzt.

Das Ventil V weist darüber hinaus eine zweckmäßig hin- und herbewegbare Ventilstange 5 auf, die einen ersten Teilabschnitt 5.1, einen zweiten Teilabschnitt 5.2 und das Ventilteil 4 umfasst. Der erste Teilabschnitt 5.1 ist mit dem Ventilteil 4 verbunden, während der zweite Teilabschnitt 5.2 von außerhalb des Ventils V durch ein Steuerungsorgan 11, z. B. einen Steuernocken, zur Steuerung des Ventils V betätigbar ist, um die Verbindung zwischen dem Frischdampfraum 1 und dem Expansionsraum 3 mittels des Ventilteils 4 zu öffnen oder zu schließen.

Ist die Verbindung zwischen dem Frischdampfraum 1 und dem Expansionsraum 3 geöffnet, kann Frischdampf in den Expansionsraum 3 geführt werden. Ist die Verbindung zwischen dem Frischdampfraum 1 und dem Expansionsraum 3 geschlossen, kann der Frischdampf in dem Expansionsraum 3 expandieren.

Das Ventil V ist mit einer ersten Ventilstangen-Führung 9 zur Führung der Ventilstange 5 und einer zweiten Ventilstangen-Führung 12 zur Führung der Ventilstange 5 ausgestattet. Die erste Ventilstangen-Führung 9 dient zur Führung des ersten Teilabschnitts 5.1 der Ventilstange 5 und die zweite Ventilstangen-Führung 12 dient zur Führung des zweiten Teilabschnitts 5.2 der Ventilstange 5. Die Ventilstangen-Führungen 9 und 12 sind in Längsrichtung der Ventilstange 5 voneinander beabstandet.

Um die Ventilstange 5 ist ein Faltenbalg 7 angeordnet, der zur abschnittsweisen, zweckmäßig hermetischen Abdichtung des Expansionsraums 3 dient. Der Faltenbalg 7 ist insbesondere um die erste Ventilstangen-Führung 9 herum angeordnet und vorzugsweise zweckmäßig entlang der ersten Ventilstangen-Führung 9 entsprechend der Ventilstangenbewegung hin- und herbewegbar. Der Faltenbalg 7 weist aus Dauerhaltbarkeitsgründen einen Mindestdurchmesser und eine Mindestlänge auf.

Das Ventil V umfasst einen Ventilraum 6, der mitunter von der zweiten Ventilstangen-Führung 12 und einem Ventilgehäuse 10 begrenzt wird. Der zweite Ventilabschnitt 5.2 der Ventilstange 5 verläuft abschnittsweise innerhalb des Ventilraums 6 und ist aus dem Ventilraum 6 und dem Ventilgehäuse 10 nach außen geführt, um durch das Steuerungsorgan 11 betätigt werden zu können.

Ein Ventilrückstellelement 8 ist vollständig in dem Frischdampfraum 1 untergebracht und dient zur Rückstellung des Ventilteils 4 in seine Schließstellung. Dadurch, dass das Ventilrückstellelement 8 in dem Frischdampfraum 1 angeordnet ist, kann der Faltenbalg 7 so angeordnet werden, dass das Schadvolumen minimiert wird. Des Weiteren ist dadurch eine Reduktion der Bauhöhe des Ventiltriebs und des Ventils V per se möglich.

Das Ventilrückstellelement 8 ist als Rückstellfeder, insbesondere Spiralfeder ausgeführt, die direkt auf die Stirnfläche des Ventilteils 4 wirkt.

Um die Verbindung zwischen dem Frischdampfraum 1 und dem Expansionsraum 3 zu schließen, beaufschlagt das Ventilrückstellelement 8 das Ventilteil 4 so, dass es gegen einen Ventilsitz 4.1 gedrückt wird. Um die Verbindung zwischen dem Frischdampfraum 1 und dem Expansionsraum 3 zu öffnen, beaufschlagt das Steuerorgan 11 die Ventilstange 5 und somit das Ventilteil 4 so, dass es vom Ventilsitz 4.1 gelöst wird. Ein umgekehrt wirkender Mechanismus ist ebenso möglich.

Das Ventilrückstellelement 8 und der Faltenbalg 7 und vorzugsweise die Ventilstange 5, insbesondere das Ventilteil 4 erstrecken sich koaxial.

Die Ventilstange 5 ist um ihre Längsachse drehbar gelagert. Folglich ist ebenso das Ventilteil 4 drehbar. Die Ventilstange 5, insbesondere das Ventilteil 4 ist rotatorisch von dem Faltenbalg 7 getrennt und quasi unabhängig von dem Faltenbalg 7 drehbar. Dadurch wird ermöglich, dass das Ventilteil 4 in unterschiedlichen Ausrichtungen an den Ventilsitz 4.1 angelegt wird und somit eine gleichmäßigere Abnutzung des Ventilteils 4 und/oder des Ventilsitzes 4.1 erzielt wird.

Aus Figur 1 ist ersichtlich, dass der Faltenbalg 7 dazu dient, den Expansionsraum 3 gegenüber der Außenseite AS des Ventils V abzudichten und insbesondere gegenüber dem den Ventilraum 6 und den zweiten Teilabschnitt 5.2 der Ventilstange 5 umfassenden Ventilbetätigungsabschnitt VB, wo normalerweise ein niedrigerer Druck herrscht als in dem unter Expansionsdruck stehenden Expansionsraum 3.

Bei der in Figur 1 gezeigten Ausführungsform der Erfindung ist die Innenfläche des Faltenbalgs 7, d. h. die der Ventilstange 5 zugewandte Fläche, fluidisch mit dem Expansionsraum 3 verbunden. Somit kann der Dampf auf die Innenfläche des Faltenbalgs 7 wirken, so dass der Faltenbalg 7 innendrurkbeaufschlagbar ist.

Zu erwähnen ist, dass alternativ oder ergänzend zu dem Ventilrückstellelement 8 der Faltenbalg 7 als Rückstellelement mit Federwirkung zur Rückstellung des Ventilteils 4 ausgeführt sein kann.

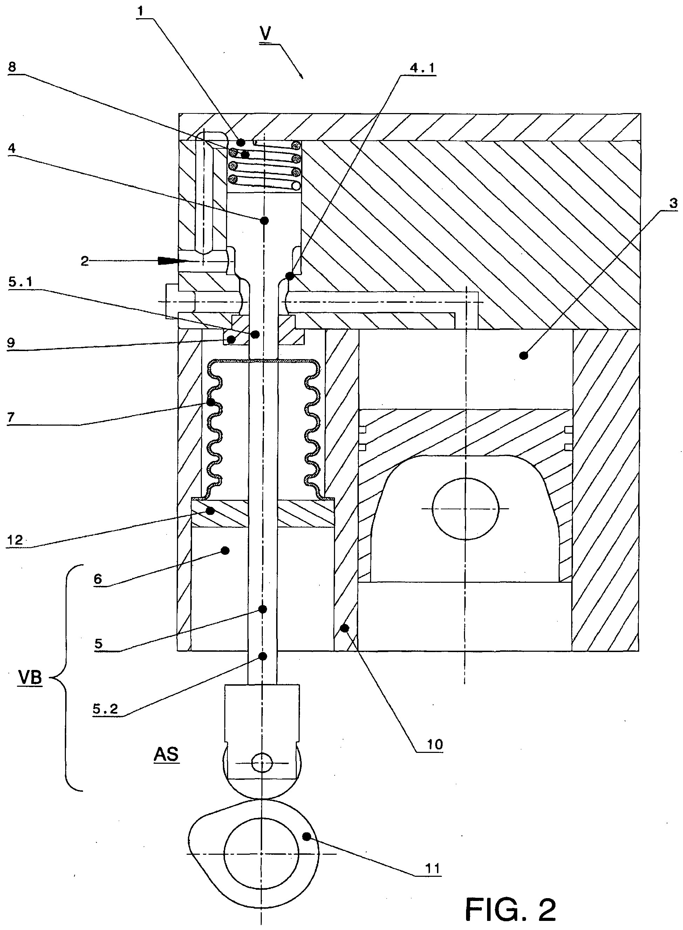

Figur 2 zeigt eine Querschnittsansicht eines Ventils V gemäß einer anderen Ausführungsform der Erfindung.

Eine Besonderheit der in Figur 2 gezeigten Ausführungsform ist, dass der Faltenbalg 7 mit seinem feststehenden End- oder Stirnabschnitt an der zweiten Ventilstangen-Führung 12 montiert ist.

Eine weitere Besonderheit ist, dass die Außenfläche des Faltenbalgs 7, d. h. die der Ventilstange 5 abgewandte Fläche, mit dem Expansionsraum 3 fluidisch verbunden ist. Somit kann der Dampf auf die Außenfläche des Faltenbalgs 7 wirken, so dass der Faltenbalg 7 außendruckbeaufschlagbar ist.

### Bezugszeichenliste:

- 1: Zuführraum
- 2: Ventilzufuhr
- 3: Expansionsraum
- 4: Ventilteil
- 4.1: Ventilsitz
- 5: Ventilstange
- 5.1: erster Teilabschnitt der Ventilstange (Ventilschaft)
- 5.2: zweiter Teilabschnitt der Ventilstange (Stößelstange)
- 6: Ventilraum
- 7: Faltenbalg
- 8: Ventilrückstellelement
- 9: Ventilstangen-Führung
- 10: Ventilgehäuse
- 11: Steuerungsorgan
- 12: Ventilstangen-Führung
- V: Ventil
- VB: Ventilbetätigungsabschnitt
- AS: Außenseite des Ventils *****

## Patentansprüche

1. Ventil (V), z. B. Dampfventil, vorzugsweise für eine Expansionsmaschine für ein Kraftfahrzeug, mit
- einem Zuführraum (1), in den ein Medium, insbesondere Dampf, über eine Ventilzufuhr (2) einführbar ist,
- einem Arbeitsraum (3), in den das Medium aus dem Zuführraum (1) einführbar ist und in dem das Medium expandierbar oder komprimierbar ist,
- einem Ventilteil (4), über das die Verbindung zwischen dem Zuführraum (1) und dem Arbeitsraum (3) offenbar oder schließbar ist,
- einer hin- und herbewegbaren Ventilstange (5), die mit einem ersten Teilabschnitt (5.1) mit dem Ventilteil (4) verbunden ist und über einen zweiten Teilabschnitt (5.2) ansteuerbar ist, und
- das Ventil (V) ein Ventilrückstellelement (8) aufweist, das zur Rückstellung des Ventilteils (4) dient,
**dadurch gekennzeichnet, dass**
- das Ventil (V) einen Faltenbalg (7) aufweist, der zur abschnittsweisen Abdichtung des Arbeitsraums (3) dient, wobei der Faltenbalg (7) um die Ventilstange (5) herum angeordnet ist, und
- das Ventilrückstellelement (8) in dem Zuführraum (1) angeordnet ist.

2. Ventil (V) nach Anspruch 1, **dadurch gekennzeichnet, dass** der Faltenbalg (7) um eine Ventilstangen-Führung (9) zur Führung der Ventilstange (5), insbesondere deren ersten Teilabschnitts (5.1), herum angeordnet ist und vorzugsweise entlang der Ventilstangen-Führung (9) hin- und herbewegbar ist.

3. Ventil (V) nach einem der vorhergehenden Ansprüche, **dadurch gekennzeichnet, dass** der Faltenbalg (7) an einer Ventilstangen-Führung (12) zur Führung der Ventilstange (5), insbesondere deren zweiten Teilabschnitts (5.2), feststehend montiert ist.

4. Ventil (V) nach einem der vorhergehenden Ansprüche, **dadurch gekennzeichnet, dass** der Faltenbalg (7) mit seiner Innenfläche mit dem Arbeitsraum (3) fluidisch verbunden ist und somit vorzugsweise innendruckbeaufschlagbar ist.

5. Ventil (V) nach einem der Ansprüche 1 bis 3, **dadurch gekennzeichnet, dass** der Faltenbalg (7) mit seiner Außenfläche mit dem Arbeitsraum (3) fluidisch verbunden ist und somit vorzugsweise außendruckbeaufschlagbar ist.

6. Ventil (V) nach einem der vorhergehenden Ansprüche, **dadurch gekennzeichnet, dass** der Faltenbalg (7) zur Aufnahme der Ventilstangenbewegung dient und zweckmäßig der Ventilstangenbewegung folgt.

7. Ventil (V) nach einem der vorhergehenden Ansprüche, **dadurch gekennzeichnet, dass** der Faltenbalg (7) metallisch ist.

8. Ventil (V) nach einem der vorhergehenden Ansprüche, **dadurch gekennzeichnet, dass** das Ventil (V) einen Ventilraum (6) aufweist und der zweite Teilabschnitt (5.2) der Ventilstange (5) zumindest abschnittsweise in dem Ventilraum (6) verläuft.

9. Ventil (V) nach einem der vorhergehenden Ansprüche, **dadurch gekennzeichnet, dass** der Faltenbalg (7) zur Abdichtung des Arbeitsraums (3)
- gegenüber dem Ventilbetätigungsabschnitt (VB), insbesondere dem Ventilraum (6) und/oder dem zweiten Teilabschnitt (5.2) der Ventilstange (5) dient, und/oder
- gegenüber der Außenseite (AS) des Ventils (V) dient.

10. Ventil (V) nach einem der vorhergehenden Ansprüche, **dadurch gekennzeichnet, dass** das Ventil (V) ein Ventilgehäuse (10) aufweist und der zweite Teilabschnitt (5.2) der Ventilstange (5), vorzugsweise über den Ventilraum (6), aus dem Ventilgehäuse (10)nach außen geführt ist, um durch ein Steuerungsorgan (11) zur Steuerung des Ventils (V) betätigbar zu sein.

11. Ventil (V) nach einem der vorhergehenden Ansprüche, **dadurch gekennzeichnet, dass** das Ventilrückstellelement (8) zur Rückstellung des Ventilteils (4) in seine Schließstellung dient, und/oder so angeordnet ist, dass es direkt auf das Ventilteil (4) wirkt.

12. Ventil (V) nach einem der vorhergehenden Ansprüche, **dadurch gekennzeichnet, dass** das Ventilrückstellelement (8) als Rückstellfeder ausgeführt ist.

13. Ventil (V) nach einem der vorhergehenden Ansprüche, **dadurch gekennzeichnet, dass** das Ventilteil (4) an einem Ventilsitz (4.1) anlegbar ist.

14. Ventil (V) nach einem der vorhergehenden Ansprüche, **dadurch gekennzeichnet, dass** das Ventilteil (4) Teil der Ventilstange (5) ist, insbesondere Teil des ersten Teilabschnitts (5.1) der Ventilstange (5).

15. Ventil (V) nach einem der vorhergehenden Ansprüche, **dadurch gekennzeichnet, dass** das Ventilteil (4) rotatorisch vom Faltenbalg (7) separiert ist und insbesondere unabhängig vom Faltenbalg (7) drehbar gelagert ist.

16. Ventil (V) nach einem der vorhergehenden Ansprüche, **dadurch gekennzeichnet, dass** das Ventilteil (4) mit seiner Stirnfläche den Zuführraum (1) abschnittsweise begrenzt.

17. Ventil (V) nach einem der vorhergehenden Ansprüche, **dadurch gekennzeichnet, dass** der Faltenbalg (7) und das Ventilrückstellelement (8) koaxial angeordnet sind.

18. Ventil (V) nach einem der vorhergehenden Ansprüche, **dadurch gekennzeichnet, dass**
- das Ventil (V) ein Dampfventil ist und/oder
- das Medium ein arbeitsfähiges Medium ist, vorzugsweise Dampf.

19. Ventil (V) nach einem der vorhergehenden Ansprüche, **dadurch gekennzeichnet, dass** der Faltenbalg (7) als Rückstellelement zur Rückstellung des Ventilteils (4) genutzt wird.

20. Expansions- oder Kompressormaschine für ein Kraftfahrzeug, vorzugsweise Nutzfahrzeug, mit einem Ventil (V) nach einem der vorhergehenden Ansprüche.

21. Expansions- oder Kompressormaschine nach Anspruch 20, **dadurch gekennzeichnet, dass** das Ventil (V) als stehendes Ventil (V) ausgeführt ist.

22. Kraftfahrzeug, vorzugsweise Nutzfahrzeug, mit einem Ventil (V) nach einem der Ansprüche 1 bis 19 oder einer Expansions- oder Kompressormaschine nach Anspruch 20 oder 21. *****

## Claims

1. A valve (V), e.g. a steam valve, preferably for an expansion machine for a motor vehicle, having
- a feed space (1), into which a medium, in particular steam, can be fed via a valve feed (2),
- a working space (3), into which the medium can be fed from the feed space (1) and in which the medium can be expanded or compressed,
- a valve part (4), via which the connection between the feed space (1) and the working space (3) can be opened or closed,
- a reciprocating valve rod (5), which is connected by a first subsection (5.1) to the valve part (4) and can be controlled by means of a second subsection (5.2), and
- the valve (V) has a valve return element (8), which serves to return the valve part (4), **characterized in that**
- the valve (V) has a corrugated bellows (7), which serves to seal off the working space (3) sectionwise, wherein the corrugated bellows (7) is arranged around the valve rod (5), and
- the valve return element (8) is arranged in the feed space (1).

2. The valve (V) according to Claim 1, **characterized in that** the corrugated bellows (7) is arranged around a valve rod guide (9) for guiding the valve rod (5), in particular the first subsection (5.1) thereof, and can preferably be moved backwards and forwards along the valve rod guide (9).

3. The valve (V) according to one of the preceding claims, **characterized in that** the corrugated bellows (7) is mounted in a fixed manner on a valve rod guide (12) for guiding the valve rod (5), in particular the second subsection (5.2) thereof.

4. The valve (V) according to one of the preceding claims, **characterized in that** the inner surface of the corrugated bellows (7) is connected fluidically to the working space (3), and the corrugated bellows can thus preferably be subjected to an internal pressure.

5. The valve (V) according to one of Claims 1 to 3, **characterized in that** the outer surface of the corrugated bellows (7) is connected fluidically to the working space (3), and the corrugated bellows can thus preferably be subjected to an external pressure.

6. The valve (V) according to one of the preceding claims, **characterized in that** the corrugated bellows (7) is used to accommodate the movement of the valve rod and expediently follows the movement of the valve rod.

7. The valve (V) according to one of the preceding claims, **characterized in that** the corrugated bellows (7) is metallic.

8. The valve (V) according to one of the preceding claims, **characterized in that** the valve (V) has a valve space (6) and the second subsection (5.2) of the valve rod (5) extends at least sectionwise in the valve space (6).

9. The valve (V) according to one of the preceding claims, **characterized in that** the corrugated bellows (7) is used for sealing off the working space (3)
- from the valve actuating section (VB), in particular from the valve space (6) and/or the second subsection (5.2) of the valve rod (5), and/or
- from the outside (AS) of the valve (V).

10. The valve (V) according to one of the preceding claims, **characterized in that** the valve (V) has a valve housing (10) and the second subsection (5.2) of the valve rod (5) is passed through to the outside of the valve housing (10), preferably via the valve space (6), to enable it to be actuated by a control member (11) for controlling the valve (V).

11. The valve (V) according to one of the preceding claims, **characterized in that** the valve return element (8) serves to return the valve part (4) to its closed position and/or is arranged in such a way that it acts directly on the valve part (4).

12. The valve (V) according to one of the preceding claims, **characterized in that** the valve return element (8) is embodied as a return spring.

13. The valve (V) according to one of the preceding claims, **characterized in that** the valve part (4) can be placed on a valve seat (4.1).

14. The valve (V) according to one of the preceding claims, **characterized in that** the valve part (4) is part of the valve rod (5), in particular part of the first subsection (5.1) of the valve rod (5).

15. The valve (V) according to one of the preceding claims, **characterized in that** the valve part (4) is separated in terms of rotation from the corrugated bellows (7) and, in particular, is mounted so as to be rotatable independently of the corrugated bellows (7).

16. The valve (V) according to one of the preceding claims, **characterized in that** the end face of the valve part (4) delimits the feed space (1) sectionwise.

17. The valve (V) according to one of the preceding claims, **characterized in that** the corrugated bellows (7) and the valve return element (8) are arranged coaxially.

18. The valve (V) according to one of the preceding claims, **characterized in that**
- the valve (V) is a steam valve and/or
- the medium is a medium capable of doing work, preferably steam.

19. The valve (V) according to one of the preceding claims, **characterized in that** the corrugated bellows (7) is used as a return element for returning the valve part (4).

20. An expansion or compressor machine for a motor vehicle, preferably a commercial vehicle, having a valve (V) according to one of the preceding claims.

21. The expansion or compressor machine according to Claim 20, **characterized in that** the valve (V) is embodied as an upright valve (V).

22. A motor vehicle, preferably a commercial vehicle, having a valve (V) according to one of Claims 1 to 19 or an expansion or compressor machine according to Claim 20 or 21.

## Revendications

1. Soupape (V), par exemple une soupape à vapeur, de préférence pour un moteur à expansion d'un véhicule automobile, comprenant
- un espace d'alimentation (1), dans lequel peut être introduit un milieu, en particulier de la vapeur, par le biais d'une alimentation de soupape (2),
- un espace de travail (3) dans lequel le milieu provenant de l'espace d'alimentation (1) peut être introduit et dans lequel le milieu peut être dilaté ou comprimé,
- une partie de soupape (4) par le biais de laquelle la connexion entre l'espace d'alimentation (1) et l'espace de travail (3) peut être ouverte ou fermée,
- une tige de soupape déplaçable d'avant en arrière (5) qui est connectée à la partie de soupape (4) par une première portion partielle (5.1) et qui peut être commandée par le biais d'une deuxième portion partielle (5.2), et
- la soupape (V) présentant un élément de rappel de soupape (8) qui sert au rappel de la partie de soupape (4),
**caractérisée en ce que**
- la soupape (V) présente un soufflet (7) qui sert à étanchéifier en partie l'espace de travail (3), le soufflet (7) étant disposé autour de la tige de soupape (5), et
- l'élément de rappel de soupape (8) est disposé dans l'espace d'alimentation (1).

2. Soupape (V) selon la revendication 1, **caractérisée en ce que** le soufflet (7) est disposé autour d'un guide de tige de soupape (9) pour guider la tige de soupape (5), en particulier sa première portion partielle (5.1) et peut être déplacé d'avant en arrière de préférence le long du guide de la tige de soupape (9).

3. Soupape (V) selon l'une quelconque des revendications précédentes, **caractérisée en ce que** le soufflet (7) est monté de manière fixe sur un guide de tige de soupape (12) pour guider la tige de soupape (5), en particulier sa deuxième portion partielle (5.2).

4. Soupape (V) selon l'une quelconque des revendications précédentes, **caractérisée en ce que** le soufflet (7) est connecté fluidiquement par sa surface interne avec l'espace de travail (3) et peut ainsi de préférence être sollicité avec une pression interne.

5. Soupape (V) selon l'une quelconque des revendications 1 à 3, **caractérisée en ce que** le soufflet (7) est connecté fluidiquement par sa surface externe à l'espace de travail (3) et peut ainsi de préférence être sollicité avec une pression externe.

6. Soupape (V) selon l'une quelconque des revendications précédentes, **caractérisée en ce que** le soufflet (7) sert à recevoir le déplacement de la tige de soupape et suit de manière judicieuse le déplacement de la tige de soupape.

7. Soupape (V) selon l'une quelconque des revendications précédentes, **caractérisée en ce que** le soufflet (7) est métallique.

8. Soupape (V) selon l'une quelconque des revendications précédentes, **caractérisée en ce que** la soupape (V) présente un espace de soupape (6) et la deuxième portion partielle (5.2) de la tige de soupape (5) s'étend au moins en partie dans l'espace de soupape (6).

9. Soupape (V) selon l'une quelconque des revendications précédentes, **caractérisée en ce que** le soufflet (7) sert à étanchéifier l'espace de travail (3)
- par rapport à la portion de commande de soupape (VB), en particulier l'espace de soupape (6) et/ou la deuxième portion partielle (5.2) de la tige de soupape (5), et/ou
- par rapport au côté extérieur (AS) de la soupape (V).

10. Soupape (V) selon l'une quelconque des revendications précédentes, **caractérisée en ce que** la soupape (V) présente un boîtier de soupape (10) et la deuxième portion partielle (5.2) de la tige de soupape (5) est guidée, de préférence par le biais de l'espace de soupape (6), hors du boîtier de soupape (10) vers l'extérieur, afin de pouvoir être commandée par un organe de commande (11) pour commander la soupape (V).

11. Soupape (V) selon l'une quelconque des revendications précédentes, **caractérisée en ce que** l'élément de rappel de soupape (8) sert à rappeler la partie de soupape (4) dans sa position de fermeture, et/ou est disposé de telle sorte qu'il agisse directement sur la partie de soupape (4).

12. Soupape (V) selon l'une quelconque des revendications précédentes, **caractérisée en ce que** l'élément de rappel de soupape (8) est réalisé sous forme de ressort de rappel.

13. Soupape (V) selon l'une quelconque des revendications précédentes, **caractérisée en ce que** la partie de soupape (4) peut être appliquée contre un siège de soupape (4.1).

14. Soupape (V) selon l'une quelconque des revendications précédentes, **caractérisée en ce que** la partie de soupape (4) fait partie de la tige de soupape (5), en particulier fait partie de la première portion partielle (5.1) de la tige de soupape (5).

15. Soupape (V) selon l'une quelconque des revendications précédentes, **caractérisée en ce que** la partie de soupape (4) est séparée en termes de rotation du soufflet (7) et en particulier est supportée de manière rotative indépendamment du soufflet (7).

16. Soupape (V) selon l'une quelconque des revendications précédentes, **caractérisée en ce que** la partie de soupape (4) limite en partie avec sa surface frontale l'espace d'alimentation (1).

17. Soupape (V) selon l'une quelconque des revendications précédentes, **caractérisée en ce que** le soufflet (7) et l'élément de rappel de soupape (8) sont disposés coaxialement.

18. Soupape (V) selon l'une quelconque des revendications précédentes, **caractérisée en ce que**
- la soupape (V) est une soupape à vapeur et/ou
- le milieu est un milieu de travail, de préférence de la vapeur.

19. Soupape (V) selon l'une quelconque des revendications précédentes, **caractérisée en ce que** le soufflet (7) est utilisé en tant qu'élément de rappel pour le rappel de la partie de soupape (4).

20. Moteur à expansion ou moteur à compresseur pour un véhicule automobile, de préférence un véhicule utilitaire, comprenant une soupape (V) selon l'une quelconque des revendications précédentes.

21. Moteur à expansion ou moteur à compresseur selon la revendication 20, **caractérisé en ce que** la soupape (V) est réalisée sous forme de soupape latérale (V).

22. Véhicule automobile, de préférence véhicule utilitaire, comprenant une soupape (V) selon l'une quelconque des revendications 1 à 19 ou un moteur à expansion ou un moteur à compresseur selon la revendication 20 ou 21.
